# FASCICULE DE BREVET EUROPEEN

(11) **EP 0 594 491 B1**
(45) Date de publication et mention de la délivrance du brevet: **21.05.1997**
(21) Numéro de dépôt: 93402557.8
(22) Date de dépôt: 18.10.1993
(51) Int. Cl.: B29C 45/68

(54) **Dispositif hydromécanique de fermeture d'une presse d'injection, et presse d'injection correspondante**
Hydromechanische Schliessvorrichtung für eine Spritzgiessmaschine und entsprechende Spritzgiessmaschine
Hydromechanical closing device for an injection moulding machine and corresponding injection moulding machine

(30) Priorité: 22.10.1992 FR 9212664
(43) Date de publication de la demande: 27.04.1994
(73) Titulaire: BILLION S.A., F-01810 Bellignat (FR)
(72) Inventeur: Guyon, Jean-Francois, F-01810 Groissiat (FR)
(74) Mandataire: Jacobson, Claude

(56) Documents cités:
- FR-A- 1 183 875
- FR-A- 1 364 693
- FR-A- 1 555 442
- FR-A- 2 122 769
- FR-A- 2 289 335

## Description

La présente invention est relative à un dispositif hydromécanique de fermeture d'une presse d'injection, du type comprenant un vérin de fermeture, une tringlerie d'approche rapide, articulée entre le piston de ce vérin et le plateau mobile de la presse, et un vérin d'approche dont le corps est relié au piston du vérin de fermeture et dont la tige de piston est reliée à la tringlerie, le vérin d'approche étant logé coaxialement dans le piston du vérin de fermeture, la tringlerie articulée étant constituée de deux moitiés symétriques par rapport à l'axe des deux vérins, la tige de piston du vérin d'approche s'étendant suivant cet axe, chaque moitié de la tringlerie formant une genouillère qui se replie vers l'extérieur et dont la bielle arrière est articulée sur le piston du vérin de fermeture tandis que sa bielle avant est articulée sur le plateau mobile de la presse, chaque genouillère, en position d'extension maximale du vérin d'approche, ayant dépassé son point mort et étant en butée sur un élément de butée de ce vérin.

Dans un dispositif connu de ce type (FR-A-1 555 442), en fin d'extension du vérin d'approche, les genouillères butent sur le corps du vérin d'approche, qui est fixe par rapport au piston du vérin de fermeture et qui est de grand diamètre. Ceci interdit d'une part de disposer les points d'appui des genouillères sur le plateau mobile près de l'axe de la presse, d'autre part de placer un dispositif d'éjection derrière ce plateau.

L'invention a pour but de remédier à ces inconvénients et, à cet effet, elle a pour objet un dispositif hydromécanique de fermeture du type précité, caractérisé en ce que la tige de piston du vérin d'approche est reliée à un point intermédiaire de la bielle arrière de chaque genouillère par l'intermédiaire d'une biellette et constitue ledit élément de butée pour chaque genouillère.

Suivant d'autres caractéristiques :
- le piston du vérin de fermeture forme le corps du vérin d'approche;
- le piston du vérin de fermeture comporte un alésage borgne dans lequel coulisse le piston du vérin d'approche.

L'invention a également pour objet une presse d'injection, du type comprenant un plateau fixe disposé à une extrémité d'un jeu de colonnes parallèles, un plateau mobile monté coulissant sur ces colonnes, un vérin de fermeture dont le corps est monté à l'autre extrémité des colonnes et dont le piston est relié au plateau mobile par l'intermédiaire d'une tringlerie articulée, et un vérin d'approche qui actionne cette tringlerie et dont le corps est relié au piston du vérin de fermeture, presse dans laquelle les deux vérins et la tringlerie constituent un dispositif de fermeture hydromécanique tel que défini ci-dessus.

De façon avantageuse, les points de liaison des bielles avant et du plateau mobile sont situés plus près de l'axe général de la presse que les colonnes.

Un exemple de réalisation de l'invention va maintenant être décrit en regard des dessins annexés, sur lesquels :
- la Figure 1 est une vue en élévation latérale, avec coupe axiale, d'une presse d'injection conforme à l'invention, en position ouverte; et
- la Figure 2 est une vue analogue représentant la presse en position fermée.

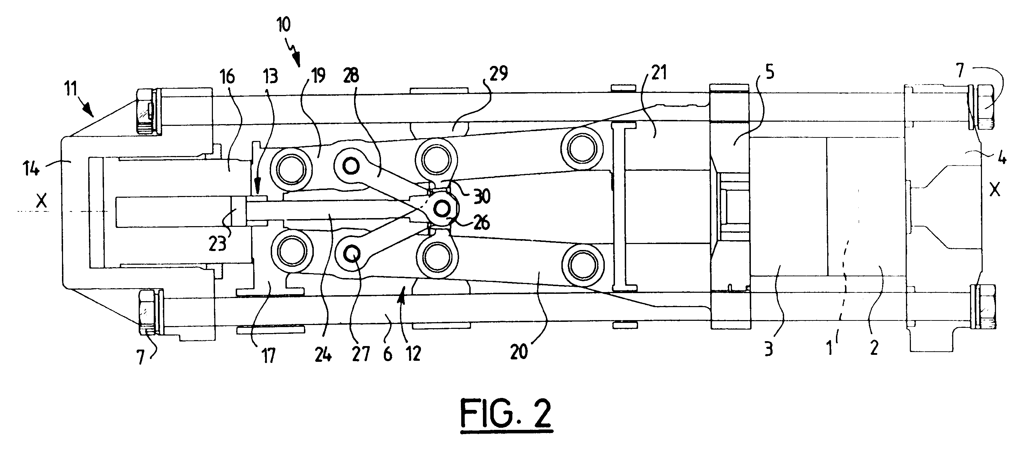

La presse d'injection représentée aux dessins est destinée à fabriquer en série des pièces en matière plastique ou en caoutchouc par injection sous pression de la matière dans une cavité de moulage 1 (Figure 2) délimitée, en position fermée de la presse, par deux demi-moules 2 et 3. Le demi-moule 2 est fixé au plateau fixe 4 de la presse, tandis que le demi-moule 3 est fixé au plateau mobile 5. La presse comprend un jeu de colonnes ou tirants horizontaux 6, parallèles entre eux, généralement au nombre de quatre. Chaque colonne comporte à chaque extrémité une tête de butée 7 et traverse à coulissement un alésage respectif 8, 9 des plateaux 4 et 5. Le plateau fixe 4 est positionné contre les têtes 7 d'une extrémité, dite extrémité avant, de la presse, tandis que le plateau mobile 5 coulisse sur une partie intermédiaire de la longueur des colonnes, sous l'action d'un dispositif hydromécanique 10 qui va maintenant être décrit.

Le dispositif 10 comprend un vérin hydraulique de fermeture 11, une tringlerie articulée 12 et un vérin hydraulique d'approche 13. Le vérin de fermeture 11 comprend un corps de vérin 14 positionné contre les têtes de butée 7 de l'extrémité, dite extrémité arrière, de la presse opposée au plateau fixe 4. Le corps 14 comporte un alésage borgne 15 de grand diamètre, ouvert vers l'avant, dont l'axe coïncide avec l'axe général horizontal X-X de la presse. Dans cet alésage coulisse le piston 16 du vérin 11, lequel porte à son extrémité avant un étrier de manoeuvre 17 guidé par au moins un palier 18 sur les colonnes 6.

La tringlerie 12 est constituée de deux moitiés symétriques par rapport à l'axe X-X. Chaque moitié constitue une genouillère à deux bielles, dont une bielle arrière 19 articulée par son extrémité arrière sur l'étrier 17 et une bielle avant 20 articulée par son extrémité arrière sur l'extrémité avant de la bielle 19 et par son extrémité avant sur une ferrure 21 solidaire de la face arrière du plateau mobile 5. Les deux genouillères sont par exemple disposées l'une au-dessus, l'autre au-dessous de l'axe X-X, dans un même plan général vertical passant par cet axe.

Le vérin d'approche 13 est disposé coaxialement dans le vérin de fermeture. Plus précisément, le piston 16 comporte un alésage borgne 22 ouvert vers l'avant qui forme le corps du vérin d'approche. Le piston 23 de celui-ci est monté coulissant dans l'alésage 22, et sa tige 24 est guidée suivant l'axe X-X à travers un orifice 25 de l'étrier 17. L'extrémité avant ou tête 26 de cette tige est reliée à un point intermédiaire 27 de chaque bielle 19 par une biellette 28, et elle est guidée suivant l'axe X-X par un croisillon 29 qui coulisse sur les colonnes 6.

Chacun des vérins 11, 13 est à double effet et comporte pour cela des moyens d'alimentation en huile non représentés. De plus, la presse est bien entendu équipée de tous les dispositifs nécessaires à l'injection de la matière à mouler.

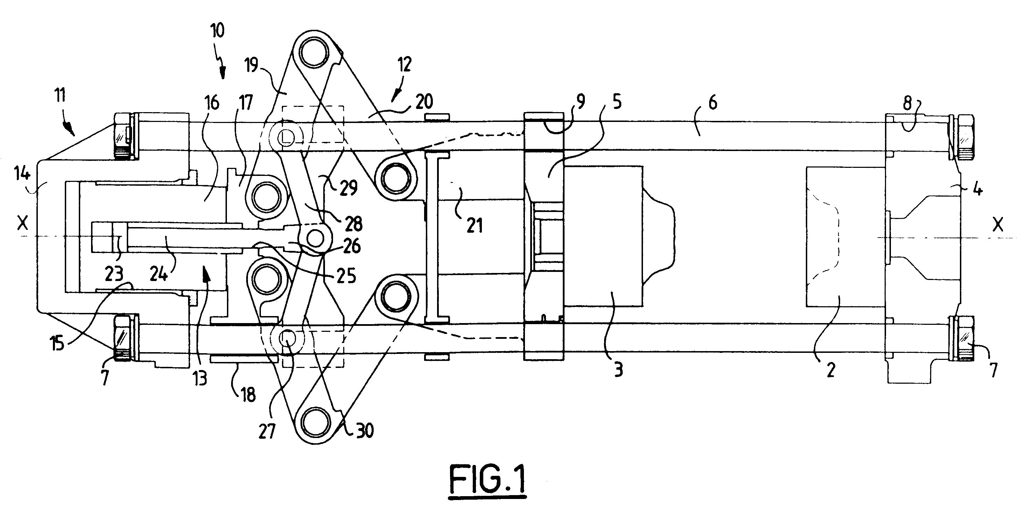

En fonctionnement, le piston 16 est positionné longitudinalement en fonction de la dimension axiale des demi-moules 2 et 3. En position ouverte de la presse (Figure 1), le vérin 13 est rétracté, ce qui provoque la pliure des deux genouillères 19-20 sous l'action des biellettes 28. Une butée arrière non représentée, par exemple entre les bielles 19 et les bielles 20, définit la pliure maximale des genouillères. Cette position correspond à la phase d'éjection de la pièce qui vient d'être réalisée dans le moule.

La fermeture du moule, en vue de la fabrication de la pièce suivante, s'effectue en deux phases successives.

Dans une première phase, le vérin d'approche 13 est mis en extension. Ceci provoque, sous l'action des biellettes 28, le redressement des deux genouillères, jusqu'à ce que, légèrement après le franchissement de leur point mort, c'est-à-dire après l'alignement de leurs trois articulations, une saillie 30 prévue à l'extrémité avant de chaque bielle 19 vienne en butée sur la tête 26 de la tige de piston 24, comme représenté sur la Figure 2. Le moule 2, 3 est alors pratiquement fermé, avec éventuellement un jeu de quelques dixièmes de millimètre à son plan de joint.

Pour terminer la fermeture, le vérin 11 est alors mis en action dans le sens de l'extension, ce qui ferme le plan de joint du moule avec une force suffisante pour résister à la pression d'injection de la matière plastique ou du caoutchouc.

Après injection de la pièce et solidification de la matière injectée, le moule est ouvert en deux phases inverses de celles décrites plus haut, à savoir par relâchement de la pression de la chambre arrière du vérin de fermeture 11 puis retrait du vérin d'approche 13.

Grâce à l'agencement coaxial intégré des deux vérins, le vérin d'approche ne fait pas saillie radialelement. L'encombrement radial du dispositif de fermeture est donc minimal. De plus, grâce à l'agencement symétrique de l'ensemble du dispositif par rapport à l'axe X-X, la tige de piston du vérin d'approche n'est soumise à aucun effort perpendiculaire à son axe, ce qui réduit les risques de fuite et de détérioration du vérin d'approche.

De plus, grâce à la butée des saillies 30 sur la tête de tige de piston 26, il est possible, comme représenté, de disposer les points d'articulation des bielles 20 sur les ferrures 21 plus près de l'axe X-X que les colonnes 6, c'est-à-dire à l'intérieur par rapport à celles-ci. Cet agencement permet de réduire sensiblement la flexion des plateaux pendant la phase d'injection.

## Revendications

1. Dispositif hydromécanique de fermeture d'une presse d'injection, du type comprenant un vérin de fermeture (11), une tringlerie (12) d'approche rapide, articulée entre le piston (16) de ce vérin et le plateau mobile (5) de la presse, et un vérin d'approche (13) dont le corps est relié au piston du vérin de fermeture et dont la tige de piston (24) est reliée à la tringlerie, le vérin d'approche (13) étant logé coaxialement dans le piston (16) du vérin de fermeture (11), la tringlerie articulée (12) étant constituée de deux moitiés symétriques par rapport à l'axe (X-X) des deux vérins (11, 13), la tige de piston (24) du vérin d'approche (13) s'étendant suivant cet axe, chaque moitié de la tringlerie (12) formant une genouillère qui se replie vers l'extérieur et dont la bielle arrière (19) est articulée sur le piston (16) du vérin de fermeture (11) tandis que sa bielle avant (20) est articulée sur le plateau mobile (5) de la presse, chaque genouillère, en position d'extension maximale du vérin d'approche (13), ayant dépassé son point mort et étant en butée sur un élément de butée (24) de ce vérin, caractérisé en ce que la tige de piston (24) du vérin d'approche (13) est reliée à un point intermédiaire de la bielle arrière (19) de chaque genouillère par l'intermédiaire d'une biellette (28) et constitue ledit élément de butée pour chaque genouillère (12).

2. Dispositif suivant la revendication 1, caractérisé en ce que le piston (16) du vérin de fermeture (11) forme le corps du vérin d'approche (13).

3. Dispositif suivant la revendication 2, caractérisé en ce que le piston (16) du vérin de fermeture (11) comporte un alésage borgne (22) dans lequel coulisse le piston (23) du vérin d'approche (13).

4. Presse d'injection, du type comprenant un plateau fixe (4) disposé à une extrémité d'un jeu de colonnes parallèles (6), un plateau mobile (5) monté coulissant sur ces colonnes, un vérin de fermeture (11) dont le corps (14) est monté à l'autre extrémité des colonnes et dont le piston (16) est relié au plateau mobile (5) par l'intermédiaire d'une tringlerie articulée (12), et un vérin d'approche (13) qui actionne cette tringlerie et dont le corps est relié au piston du vérin de fermeture, caractérisée en ce que les deux vérins (11, 13) et la tringlerie (12) constituent un dispositif (10) de fermeture hydromécanique conforme à l'une quelconque des revendications 1 à 3.

5. Presse d'injection suivant la revendication 4, caractérisée en ce que les points de liaison des bielles avant (20) et du plateau mobile (5) sont situés plus près de l'axe général (X-X) de la presse que les colonnes (6).

## Claims

1. Hydromechanical locking device for an injection moulding machine, of the type comprising a locking cylinder (11), a rapid closing linkage (12) which is articulated between the piston (16) of this cylinder and the moving platen (5) of the moulding machine, and a closing cylinder (13) the body of which is connected to the piston of the locking cylinder and the piston rod (24) of which is connected to the linkage, the closing cylinder (13) being housed coaxially in the piston (16) of the locking cylinder (11), the articulated linkage (12) consisting of two halves which are symmetric with respect to the axis (X-X) of the two cylinders (11, 13), the piston rod (24) of the closing cylinder (13) extending along this axis, each half of the linkage (12) forming a toggle joint which folds outwards and the rear link (19) of which is articulated onto the piston (16) of the locking cylinder (11) while its front link (20) is articulated onto the moving platen (5) of the moulding machine, each toggle joint in the position of maximal extension of the closing cylinder (13) having extended beyond its neutral point and being in abutment on an abutment element (24) of this cylinder, characterized in that the piston rod (24) of the closing cylinder (13) is connected to an intermediate point of the rear link (19) of each toggle joint through the use of a small link (28) and constitutes the said abutment element for each toggle joint (12).

2. Device according to Claim 1, characterized in that the piston (16) of the locking cylinder (11) forms the body of the closing cylinder (13).

3. Device according to Claim 2, characterized in that the piston (16) of the locking cylinder (11) includes a blind bore (22) in which the piston (23) of the closing cylinder (13) slides.

4. Injection moulding machine, of the type comprising a stationary platen (4) arranged at one end of a set of parallel columns (6), a moving platen (5) mounted so that it can slide on these columns, a locking cylinder (11) the body (14) of which is mounted at the other end of the columns and the piston (16) of which is connected to the moving platen (5) through the use of an articulated linkage (12), and a closing cylinder (13) which actuates this linkage and the body of which is connected to the piston of the locking cylinder, characterized in that the two cylinders (11, 13) and the linkage (12) constitute a hydromechanical locking device (10) in accordance with any one of Claims 1 to 3.

5. Injection moulding machine according to Claim 4, characterized in that the connection points of the front links (20) and of the moving platen (5) are located closer to the overall axis (X-X) of the moulding machine than the columns (6).

## Patentansprüche

1. Hydromechanische Schließvorrichtung für eine Spritzgießmaschine, umfassend einen Schließzylinder (11), ein Schnellvorschubgestänge (12), das zwischen dem Kolben (16) dieses Zylinders und der beweglichen Platte (5) der Maschine angelenkt ist, und einen Vorschubzylinder (13), dessen Körper mit dem Kolben des Schließzylinders verbunden ist und dessen Kolbenstange (24) mit dem Gestänge verbunden ist, wobei der Vorschubzylinder (13) koaxial in dem Kolben (16) des Schließzylinders (11) angeordnet ist, das gelenkige Gestänge (12) aus zwei Hälften besteht, die in bezug auf die Achse (X-X) der beiden Zylinder (11, 13) symmetrisch sind, sich die Kolbenstange (24) des Vorschubzylinders (13) entlang dieser Achse erstreckt, jede Hälfte des Gestänges (12) einen Kniehebel bildet, der nach außen knickt und dessen hinteres Glied (19) an dem Kolben (16) des Schließzylinders (11) angelenkt ist, während sein vorderes Glied (20) an der beweglichen Platte (5) der Maschine angelenkt ist, wobei jeder Kniehebel in der Position der maximalen Ausdehnung des Vorschubzylinders (13) seinen Totpunkt überschritten hat und mit einem Anschlagelement (24) dieses Zylinders in Anschlag ist, dadurch gekennzeichnet, daß die Kolbenstange (24) des Vorschubzylinders (13) mittels eines Schwingarmes (28) mit einem mittleren Punkt des hinteren Glieds (19) jedes Kniehebels verbunden ist und das Anschlagelement für jeden Kniehebel (12) bildet.

2. Vorrichtung nach Anspruch 1, dadurch gekennzeichnet, daß der Kolben (16) des Schließzylinders (11) den Körper des Vorschubzylinders (13) bildet.

3. Vorrichtung nach Anspruch 2, dadurch gekennzeichnet, daß der Kolben (16) des Schließzylinders (11) eine Blindbohrung (22) aufweist, in welcher der Kolben (23) des Vorschubzylinders (13) gleitet.

4. Spritzgießmaschine, umfassend eine feststehende Platte (4), die an einem Ende einer Gruppe paralleler Säulen (6) angeordnet ist, eine bewegliche Platte (5), die auf diesen Säulen verschiebbar montiert ist, einen Schließzylinder (11), dessen Körper (14) am anderen Ende der Säulen montiert ist und dessen Kolben (16) mittels eines gelenkigen Gestänges (12) mit der beweglichen Platte (5) verbunden ist, und einen Vorschubzylinder (13), der dieses Gestänge betätigt und dessen Körper mit dem Kolben des Schließzylinders verbunden ist, dadurch gekennzeichnet, daß die beiden Zylinder (11, 13) und das Gestänge (12) eine hydromechanische Schließvorrichtung (10) nach einem der Ansprüche 1 bis 3 bilden.

5. Spritzgießmaschine nach Anspruch 4, dadurch gekennzeichnet, daß sich die Verbindungspunkte der vorderen Glieder (20) und der beweglichen Platte (5) näher an der Hauptachse (X-X) der Maschine befinden als die Säulen (6).
